Europäisches Patentamt

(19) European Patent Office

Office européen des brevets

(11) Numéro de publication: **0 082 075**
**B1**

(12) **FASCICULE DE BREVET EUROPEEN**

(45) Date de publication du fascicule du brevet:
11.06.86

(51) Int. Cl.⁴: **G 21 C 3/32**

(21) Numéro de dépôt: 82402256.0

(22) Date de dépôt: 09.12.82

(54) **Procédé de fabrication d'un assemblage combustible de réacteur nucléaire du type à eau légère et outillage pour la mise en oeuvre du procédé.**

(30) Priorité: 14.12.81 FR 8123286

(43) Date de publication de la demande:
22.06.83 Bulletin 83/25

(45) Mention de la délivrance du brevet:
11.06.86 Bulletin 86/24

(84) Etats contractants désignés:
BE CH DE FR GB IT LI SE

(56) Documents cités:
FR - A - 2 171 279
GB - A - 1 101 142
US - A - 3 352 003
US - A - 3 791 466
US - A - 4 292 130

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(84) Etats contractants désignés: **BE CH DE FR GB IT**

(73) Titulaire: **Framatome, Tour Fiat 1 place de la Coupole,
F-92400 Courbevoie (FR)**

(84) Etats contractants désignés: **BE CH DE FR GB IT LI SE**

(72) Inventeur: **Le Pargneux, Jacques, 125, Rue Duguesclin,
F-69006 Lyon (FR)**
Inventeur: **Bonnamour, Michel, 3, rue de Champagneux,
F-69008 Lyon (FR)**
Inventeur: **Filary, Gérard, 9, Résidence des Quinconces,
F-91190 Gif sur Yvette (FR)**

(74) Mandataire: **Mongrédien, André et al, c/o
BREVATOME 25, rue de Ponthieu, F-75008 Paris (FR)**

## Description

La présente invention concerne les assemblages combustibles de réacteur nucléaire du type à eau légère qui comprennent, de façon connue, un ensemble de forme générale parallélépipédique, comportant un grand nombre de crayons élémentaires renfermant le matériau combustible fissile gainé. Un tel assemblage se compose d'un squelette comportant lui-même deux pièces d'extrémité massives entretoisées par un faisceau de tubes guide creux dans lesquels sont logées les barres de contrôle et, fixées à intervalles réguliers sur les tubes guide précédents, une série de pièces d'espacement appelées grilles dans les différents canaux de section carrée desquelles sont enfilés à frottement doux les crayons combustibles. Ces assemblages, juxtaposés verticalement pour constituer le coeur actif d'un réacteur nucléaire, baignent dans l'eau sous pression de refroidissement chargée d'évacuer les calories et ont, couramment, une longueur comprise entre 4 et 5 mètres. Cette dernière dimension, le poids considérable de chacun des crayons ainsi que la légèreté des grilles d'espacement conduisent dans la pratique industrielle, à des difficultés de réalisation parfois considérables et dont l'une des plus importantes est la suivante.

La liaison entre les tubes guide et les pièces d'extrémité est fréquemment réalisée par vissage d'éléments filetés et les pièces d'espacement intermédiaire ou grilles sont rigidement fixées aux tubes guide par soudage ou par un procédé,de déformation mécanique (expansion) des tubes guide au-dessus et endessous des grilles. Pour réaliser le squelerte d'un tel assemblage combustible, on maintient généralement les tubes fixés sur les pièces d'extrémité puis on fixe ensuite rigidement les grilles d'espacement sur lesdits tubes ainsi fixés. Lors de l'opération de fixation des tubes guide sur les pièces d'extrémité, il est nécessaire d'étirer ces tubes avec une certaine force prédéterminée de façon à s'assurer que ceux-ci sont bien au contact de la pièce d'extrémité et à permettre ainsi la compensation des différences de longueur statistiques qui peuvent exister à la fabrication entre les différente tubes. Cette mise en place des tubes et leur solidarisation avec les pièces d'extrémité est réalisée par une liaison vissée qui est une opération délicate et longue et qui se fait à l'aide d'outils permettant la mesure des couples appliqués. En effet, ces couples doivent être inférieurs à une valeur limite de façon à éviter d'éventuelles détériorations des filetages. Pour fabriquer un tel assemblage, on fixe ensuite rigidement les grilles d'espacement sur les tubes ainsi vissés puis il est nécessaire de démonter au moins l'une des plaques d'extrémité pour pouvoir mettre en place les crayons de combustible, ce qui nécessite ensuite le remontage de cette (ou de ces) plaque(s) en prenant évidemment les memes précautions au moment du serrage de chaque vis quant à la valeur des couples appliqués.

Malheureusement, le vissage et le serrage des éléments filetés pour realiser la fixation des pièces d'extrémité sur le faisceau des tubes guide a presque toujours pour effet de créer dans ces tubes un effet de vrillage dû à l'introduction de couples de torsion. Comme c'est ensuite dans cet état des tubes que l'on fixe dessus rigidement les différentes grilles d'espacement, il en résulte que cet état de vrillage risque d'être ainsi figé et conservé par la suite, ce qui peut entrainer un défaut géométrique permanent de l'assemblage, nuisible à sa bonne tenue en pile ainsi qu'à sa solidité et à sa durée de fonctionnement.

La présente invention a précisément pour objet un procédé de fabrication d'un assemblage combustible de réacteur nucléaire-du type à eau légère qui, à l'aide d'un outillage particulièrement simple à mettre en oeuvre, permet d'éviter l'inconvénient majeur décrit précédemment.

Selon l'invention, un procédé de fabrication d'un assemblage combustible de réacteur nucléaire du type à eau légère est comme revendiqué dans la revendication 1.

On conçoit ainsi que, la première fixation, ou fixation provisoire des tubes guide sur les pièces d'extrémité ayant lieu par tout moyen connu et notamment par vissage, sans induction d'une quelconque torsion ou vrillage dans les tubes guide, permet ensuite de fixer les grilles d'espacement sur lesdits tubes en solidarisant ainsi les différentes pièces du squelette constituant chaque assemblage dans un état libte de toute contrainte mécanique néfaste.

Selon une caractéristique importante de la présente invention, la fixation sans torsion des tubes guide sur les pièces d'extrémité est réalisée par un vissage léger sur les tubes guide préalablement disposés entre les deux pièces d'extrémité, puis une application deux extrémités.

Les différentes pièces constituant le squelette de l'assemblage étant rigoureusement positionnées sur un banc de montage calibré, la traction longitudinale exercée sur chacun des tubes guide permet d'abord de rattraper les écarts statistiques de longueur que peuvent présenter ces différents tubes après leur fabrication et, surtout, d'assurer leur fixation par vissage sur les pièces d'extrémité sans induire de torsion dans les tubes guide et sans nécessiter d'opération longue et délicate. Dans ces conditions, la fixation finale des tubes guide aux pièces d'extrémité se fait alors que les dits tubes guide sont déjà rigidement fixés aux grilles d'espacement et bien entendu après que les crayons combustibles aient été mis en place. Les liaisons rigides ainsi réalisées lors de la fixation des grilles d'espacement sur les tubes guide maintiennent ces tubes fortement entre eux évitant ainsi tout risque de vrillage lors du serrage des vis de liaison définitives.

Selon une variante de la présente invention, la fixation provisoire des tubes guide sur les pièces d'extrémité de l'assemblage ainsi que la mise sous tension longitudinale de ces mêmes tubes guide peut être réalisée à l'aide d'une pince expansible pénétrant dans les extrémités des tubes guide pour assurer leur fixation provisoire.

La présente invention a également pour objet un outillage pour la mise en oeuvre d'un procédé de fabrication d'un assemblage combustible de réacteur nucléaire du type à eau légère comme revendique dans la revendication 3 ou 4.

Dans ce dernier mode de réalisation particulier, la fixation des tubes guide sur les pieces d'extrémité et leur mise sous tension longitudinale, est réalisée sans vissage, ce oui, par conséquent, exclut complètement tout risque de torsion des dits tubes guide avant la fixation des grilles d'espacement.

De toute façon la présente invention sera mieux comprise à la lecture qui suit de description de deux exemples de mise en oeuvre, description qui sera faite en se référant aux figures 1 à 4 ci-jointes sur lesquelles:.
- la fig. 1 montre le principe du positionnement sur un banc de montage calibré des différents éléments constituant le squelette d'un assemblage combustible fabriqué selon le procédé objet de l'invention;
- la fig. 2 montre l'étape suivante de la réalisation de l'assemblage;
- les figs. 3a et 3b représentent, dans cet ordre et de gauche à droite, les deux extrémités d'un assemblage combustible en cours de montage équipées chacune d'un outillage objet de la présente invention;
- la fig. 4 montre une variante de réalisation de l'outillage des figs. 3a et 3b.
- la fig. 5 illustre une autre variante de réalisation de l'outillage des fig. 3a et 3b.

D'une façon générale, les différentes figures précédentes représentent l'assemblage en cours de fabrication, dans sa position couchée sur un banc de positionnement précalibré. Les vues sont dessinées en coupe partielle et élévation, avec arrachement d'un certain nombre de pièces pour permettre les vues de détail.

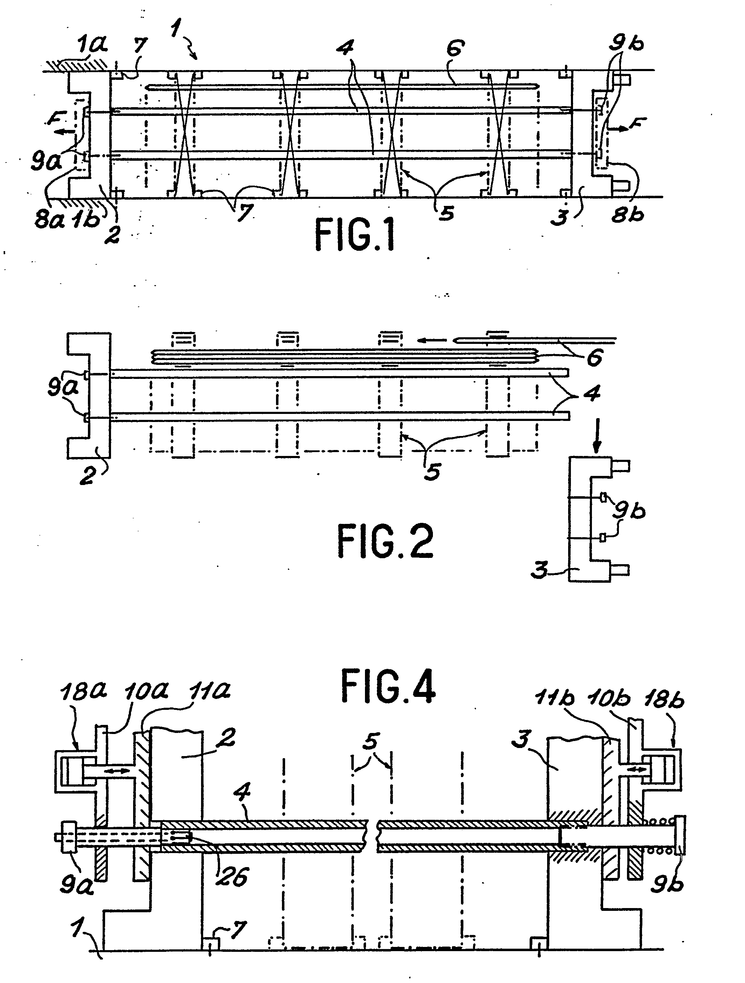

Sur la fig. 1, on a représenté un banc de montage 1 se composant d'un châssis supérieur la et d'un châssis inférieur 1b. Entre ces deux châssis, est disposé le squelette d'un assemblage qui comporte les deux pièces d'extrémité 2 et 3 et un certain nombre de tubes guide creux 4. Sur les tubes guide 4 ont été préalablement enfilés à frottement doux des grilles d'espacement 5 représentées schématiquement en pointillées sur la figure ainsi que l'emplacement de l'un des crayons de combustible 6 maintenus en place par l'ensemble des grilles d'espacement 5. Sur le banc de positionnement 1, les pièces d'extrémité 2 et 3 ainsi que les différentes grilles d'espacement 5 sont positionnées de façon rigoureuse par des cales prédisposées 7. L'emplacement de ces cales 7 a été choisi de façon à positionner d'avance les pièces d'extrémité 2 et 3 et les grilles d'espacement 5 exactement dans la relation spatiale qui doit être celle qu'ils occuperont dans l'assemblage combustible terminé. Conformément à l'invention, deux outils d'extrémité 8a et 8b sont adaptés dans les fonds des pièces d'extrémité 2 et 3 et comportent des moyens 9a et 9b de fixation des tubes guide 4 sur les pièces d'extrémité 2 et 3. Le plus souvent, ces moyens de fixation sont constitués d'éléments de vissage d'un genre en soi connu.

Selon le procédé objet de l'invention, on exerce par un moyen, non représenté sur la fig.1, une traction longitudinale symbolisée par les flèches F sur chacun des outils 8a et 8b de façon à réaliser une tension des différents tubes guide 4 entre les deux extrémités de l'assemblage. On peut alors fixer les différentes grilles d'espacement 5 à leurs places respectives sur les tubes guide 4 par tout moyen connu, tel que, par exemple, soudage ou dudgeonnage provoquant une expansion au niveau de chaque grille 5. A ce moment, le squelette de l'assemblage représenté sur la fig. 1 est mécaniquement rigidifié et figé sans possibilité d'y induire des, torsions parasites, notamment dans les tubes guide 4, lors du vissage définitif ultérieur de ceux-ci sur les pièces d'extrémité 2 et 3 correspondantes.

Les étapes suivantes de la fabrication de l'assemblage se déduisent facilement de la fig. 2 où l'on voit, qu'après avoir désolidarisé l'une des pièces d'extrémité, 3 par exemple, des tubes guides 4,on vient enfiler à frottement doux, dans les logements des grilles d,espacement 5 des différents crayons de combustible 6, Lorsque ce travail est terminé, il suffit alors de repiacer la pièce d'extrémité 3 à son emplacement prévu et de serrer l'ensemble par vissage définitif des pieces 9a et 9b, sans risque de provoquer une déformation des tubes 4 ni du squelette d'assemblage en général.

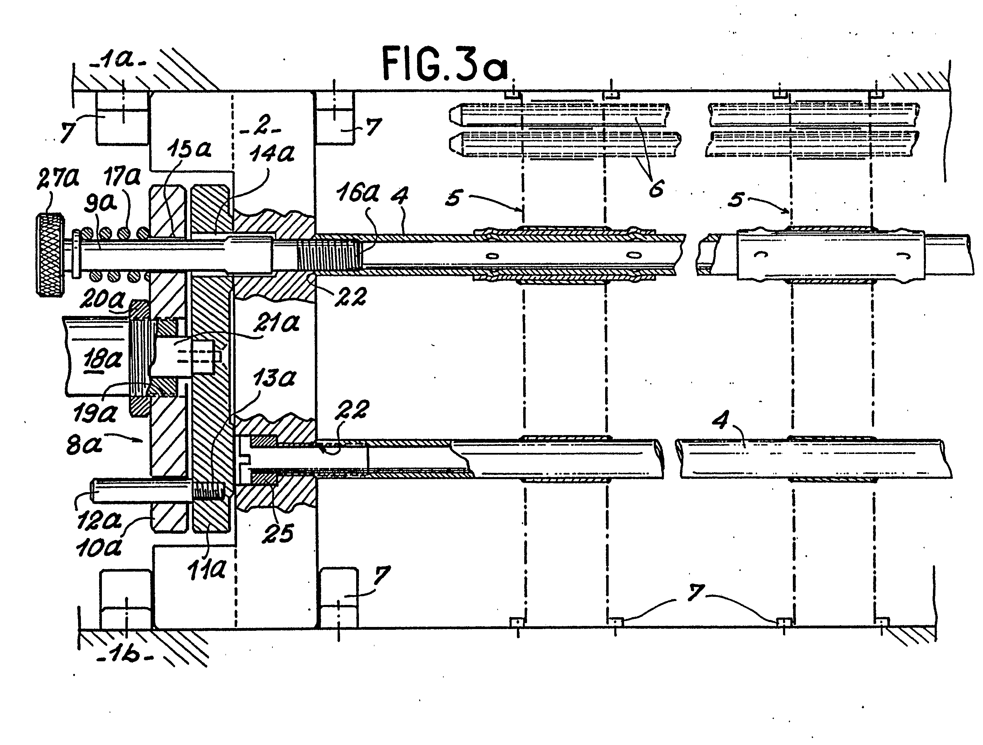

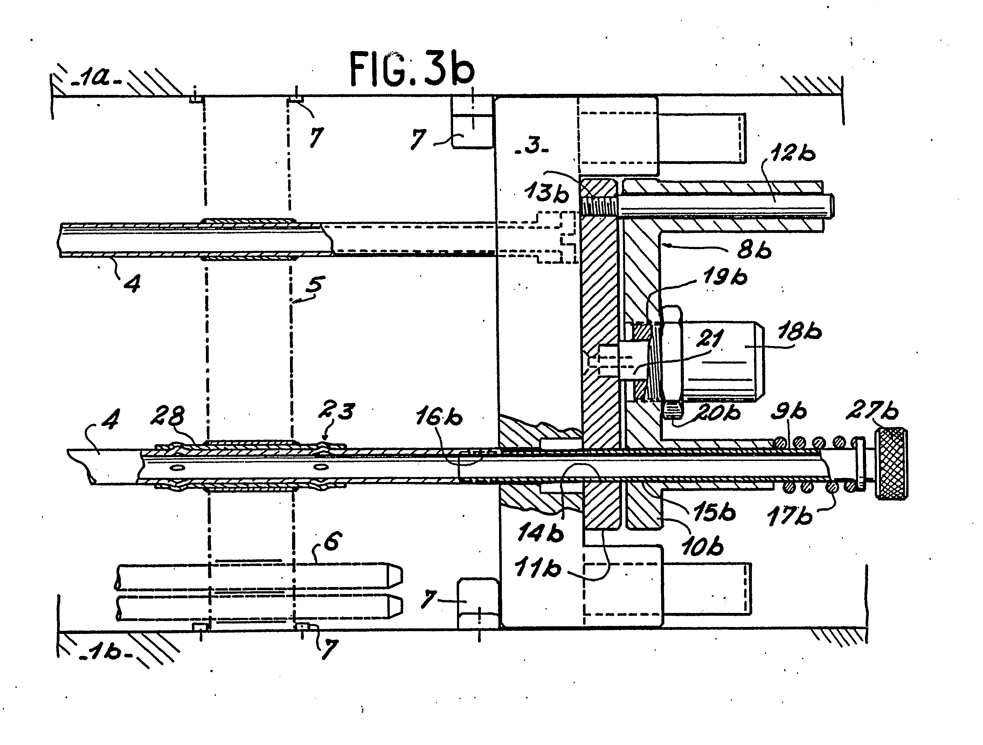

On décrira maintenant en se référant aux figures 3a et 3b le détail d'un des modes de réalisation possibles des outillages d'extrémité 8a et 8b de la fig. 1. Les figs. 3a et 3b doivent se lire de gauche à droite et représentent respectivement deux extrémités du même assemblage en cours de fabrication.

Bien entendu on retrouve sur les figs. 3a et 3b les mêmes éléments que ceux de la fig. 1 ainsi que les différentes cales d'encastrement 7 des pièces d'extrémité 2 et 3 et des grilles d'espacement 5. Les éléments correspondants des extrémités gauche et droite de l'assemblage portent le même nombre de référence, assortis de l'indice a pour l'extrémité de gauche sur la fig. 3a et de l'indice b.pour l'extrémité de droite sur la fig. 3b.

Selon l'invention, l'outillage de fabrication du squelette de l'assemblage est essentiellement constitué de deux plaques métalliques mobiles 10a externe et 11a interne pour l'extrémité de la fig. 3 et 10b (externe) et 11b (interne) pour l'extrémité de la fig. 3b. Ces deux plaques qui s'adaptent exactement sur le fond des pièces d'extrémité 2 et 3 sont positionnées l'une par rapport à l'autre et mobiles en translation longitudinale selon l'axe général de l'assemblage grâce à des colonnes de glissement 12a et 12b. Ces colonnes de glissement 12a et 12b sont respectivement vissées dans des alésages correspondants 13a et 13b des plaques internes 11a et 11b.

Les plaques métalliques internes 11a et 11b comportent en face de chaque tube guide 4 des alésages 14a et 14b qui correspondent d'ailleurs à des alésages 15a et 15b en correspondance avec les précédents dans les plaques métalliques externes 10a et 10b. Des tirants 9a et 9b possèdent une tête filetée 16a et 16b susceptible de coopérer par vissage avec les extrémités correspondantes des tubes guide 4

Le tirant 9b de la fig. 3b est réalisé sous la forme d'une tige creuse permettant le passage d'un outil d'expansion dont l'utilité apparaîtra ultérieurement. Sur chaque tirant 9a et 9b se trouve situé, entre la tete correspondante 27a et 27b et la plaque métallique externe 10a et 10b un ressort 17a, 17b permettant d'appliquer une force longitudinale sur lesdites plaques métalliques externes 10a et 10b.

Un vérin 18a, 18b de mise en compression des ressorts précédents 17a, 17b est vissé dans un alésage 19a, 19b de la plaque externe 10a, 10b correspondante et immobilisé par rapport à celle-ci à l'aide d'un écrou de fixation 20a, 20b. Chacun des deux vérins 18a et 18b comporte un piston 21 lié à la plaque interne 11a, 11b.

Le fonctionnement de la structure représentée sur les figs. 3a et 3b est le suivant. Lors de la première solidarisation des tubes guide 4 sur les pièces d'extrémité 2 et 3, on effectue un vissage léger à la main des éléments filetés 16a et 16b dans les extrémités creuses également filetées des différents tubes guide 4. Dans le cas particulier des figs. 3a et 3b donné à titre illustratif et non limitatif, la pièce d'extrémité 2 comporte en face de chaque tube guide 4 une portée conique 22 qui permet d'aligner au même niveau de translation longitudinale toutes les extrémités situées sur la partie gauche de la fig. 3a des différents tubes guide 4. En d'autres termes, les rattrapages de différences de longueur pouvant exister d'un tube 4 à l'autre sont effectues par l'extrémité opposée de la figure 3b au niveau de la pièce d'extrémité 3. Lorsque cette première étape est réalisée, on met sous tension à l'aide des verins 18a et 18b les ressorts 17a et 17b en provoquant l'écartement en translation des plaques externe et interne 10a et 11a d'une part et 10b et 11b de l'autre, ce qui conduit à la mise sous tension longitudinale des tubes guide 4. Une fois cette mise sous tension réalisée, on introduit par la partie creuse des tirants 9b un outil gràce auquel on réalise ia fixation définitive des grilles 5 sur les tubes guide 4, soit à l'aide d'un dudgeonnage 23 pratiqué entre le tube guide 4 et un manchon 28 soudé à la grille, soit à l'aide de tout procédé de liaison métallurgique tel que soudure entre tube guide et grille, cette fixation aux emplacements voulus des différentes grilles d'assemblage 5 de façon rigide et définitive étant alors effectuée alors que les tubes guide 4 sont étirés et placés sans aucune torsion induite.

Une fois cette opération effectuée, on peut détensionner les tubes guide 4 en supprimant l'effort fourni par les vérins 18a et 18b; on désolidarise les tirants 9a et 9b en les devissant simplement à la main, ce qui permet alors de démonter les pièces d'extrémité 2 et 3 pour introduire à leur place définitive les différents crayons combustibles 6.

Enfin, il suffit de replacer ces pièces d'extrémité 2 et 3 et de les serrer par vissage définitif comme cela est représente en 25 sur la figure 3a, pour achever la fabrication de l'assemblage.

Sur la fig. 5, on a représenté une autre variante de réalisation de l'outillage objet de l'invention. Sur cette fig. 5, on retrouve tous les éléments de l'exemple des figure 3a et 3b munis des mêmes nombres de référence, mais cette fois, les ressorts 17a et 17b sont situés entre les plaques métalliques externes 10a, 10b et internes 11a, 11b. Le fonctionnement de cette variante de réalisation est par ailleurs similaire à celui de la précédente, les montages des ressorts et du vérin étant toutefois en opposition par rapport aux fonctions correspondantes des fig. 3a et 3b.

L'outillage ainsi décrit assure une fixation entre pièces d'extrémité et tubes guide sans aucune torsion dans les tubes puisqu'elle est obtenue par un vissage léger des éléments filetés, et les tubes guide sont maintenus sur chaque pièce d'extrémité avec une force très précise et identique pour chaque liaison. Lors de la fabrication du squelette d'un assemblage, l'utilisation de cet outillage permet de n'effectuer la liaison vissée définitive entre les tubes guide et les pièces d'extrémité que lorsque ceux-ci sont rigidement maintenus par les grilles.

Le recours au procédé objet de l'invention permet en outre un gain de temps considérable puisque, lors de la réalisation de la première liaison provisoire entre les tubes et les pièces d'extrémité, la mise sous tension des tubes guide dont les différences statistiques de longueur sont compensées, se fait en une seule fois pour toutes les liaisons par l'action des ressorts 17 et du vérin 18 sans nécessiter le recours à des outils de serrage et de mesure des couples de serrage puisque les tubes guide 4 sont reliés aux tirants 9 par vissaqe léger.

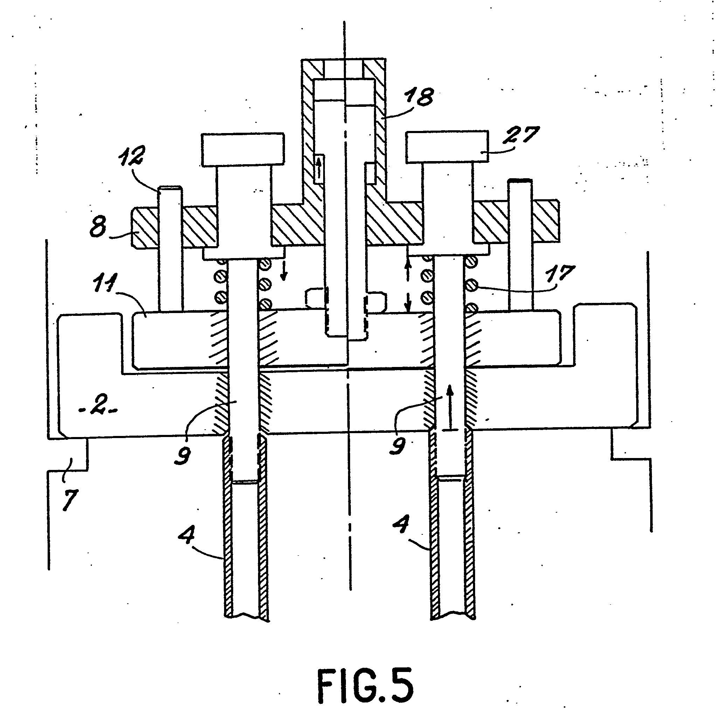

Sur la fig. 4 où l'on retrouve les mêmes éléments portant les mèmes nombres de référence que sur les figs. 1 ou 3; on a simplement illustré une variante possible des moyens de solidarisation provisoire des tubes guide 4 aux plaques d'extrémité 2 et 3. Comme on le voit sur la partie gauche de cette figure 4, le tirant 9a est terminé par une pince expansible 26 qui permet de saisir l'intérieur de l'extrémité du tube guide 4 sans qu'il y ait même besoin de recourir à un vissage léger. Cette liaison permet de réaliser la mise sous tension longitudinale du tube guide 4 comme dans l'exemple précédent et les autres étapes de fabrication de l'assemblage sont ensuite identiques.

## Revendications

1. Procédé de fabrication d'un assemblage combustible de réacteur nucléaire du type à eau légère comprenant, de façon connue, deux pièces d'extrémité (2, 3) entretoisées par des tubes guide creux (4) et sur lesquels sont fixées des grilles d'espacement (5) dans lesquelles sont logés les crayons (6) de matière combustible fissile, du genre de ceux dans lesquels on réalise une première solidarisation des pièces d'extrémité (2, 3) sur les tubes guide (4) préalablement enfilés à frottement doux dans les grilles d'espacement (5), on réalise la fixation rigide définitive des grilles d'espacement (5) sur les tubes guide (4), on désolidarise au moins l'une des pièces d'extrémité pour enfiler les crayons de matière combustible (6) dans les logements restés vides des grilles d'espacement (5) et l'on réalise le vissage définitif de la (des) pièce (s) d'extrémité, caractérisé en ce que la première solidarisation des pièces d'extrémité (2, 3) est réalisée sans induire aucune torsion sur les tubes guide (4) disposés entre les deux pièces d'extrémité (2,3), en ce qu'on applique une traction longitudinale à au moins l'une des deux extrémités des tubes guide (4) et en ce que l'on réalise la fixation rigide définitive des grilles d'espacement (5) alors que les tubes guide (4) sont étirés et placés sans aucune torsion induite.

2. Outillage pour la mise en oeuvre d'un procédé de fabrication d'un assemblage combustible de réacteur nucléaire du type à eau légère, caractérisé en ce qu'il comporte, pour chaque extrémité d'un tel assemblage:
- une plaque métallique interne (11a, 11b) apte à s'appliquer sur le fond de la pièce d'extrémité (2, 3) de l'assemblage;
- une plaque métallique externe (10a, 10b) pouvant se déplacer sous l'effet d'un vérin (18a, 18b), le long de colonnes de glissement (12a, 12b) fixées sur la plaque interne (11a, 11b), en translation longitudinale par rapport à celle-ci;
- des tirants filetés, (9a, 9b), traversant des orifices (14a, 14b, 15a, 15b) en correspondance dans la pièce d'extrémité et dans les deux plaques interne et externe, chacun des tirants étant apte à venir en prise avec un filetage interne d'une extrémité d'un tube guide (4), de l'assemblage et muni d'une tête (27a, 27b) sur laquelle vient s'appuyer un ressort de compensation (17a, 17b) de l'action du vérin.

3. Outillage pour la mise en oeuvre d'un procédé de fabrication d'un assemblage combustible de réacteur nucléaire du type à eau légère caractérisé en ce qu'il comporte, pour chaque extrémité d'un tel assemblage:
- une plaque métallique interne (11a, 11b) apte à s'appliquer sur le fond de la pièce d'extrémité (2, 3) de l'assemblage;
- une plaque métallique externe (10a, 10b) pouvant se déplacer sous l'effet d'un vérin (18a, 18b) le long de colonnes de glissement (12a, 12b) fixées sur la plaque interne (11a, 11b), en translation longitudinale par rapport à celle-ci;
- des tirants (9a, 9b) traversant des orifices en correspondance dans la pièce d'extrémité et dans les deux plaques interne et externe, équipés à leur extrémité d'une pince expansible (26) apte à venir saisir l'intérieur creux du tube guide (4) correspondant et munis chacun d'une tête sur laquelle vient s'appuyer un ressort de compensation de l'action du vérin.

## Patentansprüche

1. Verfahren zur Herstellung eines Brennelementbündels für einen Leichtwasserkernreaktor, welches in bekannter Weise zwei Endstücke (2, 3), die durch hohle Führungsrohre (4) beabstandet sind, auf denen Abstandsgitter (5) befestigt sind, in denen die Stäbe (6) aus spaltbarem Material angeordnet sind, umfaßt, von der Art, bei denen man eine erste Verbindung der Endstücke (2, 3) an den Führungsrohren (4) herstellt, die vorhergehend mit geringer Reibung in die Abstandsgitter (5) eingeführt worden sind, man die feste, endgültige Befestigung der Abstandsgitter (5) an den Führungsrohren (4) herstellt, man wenigstens eines der Endstücke löst, um die Stäbe (6) aus spaltbarem Material in die leergebliebenen Räume der Abstandsgitter (5) einzuführen, und man die endgültige Verschraubung des (der) Endstückes (Endstücke) durchführt, dadurch gekennzeichnet, daß die erste Verbindung der Endstücke (2, 3) durchgeführt wird, ohne irgendeine Torsion an den zwischen den zwei Endstücken (2, 3) angeordneten Führungsrohren (4) hervorzurufen, daß man einen Zug in Längsrichtung an wenigstens einem der zwei Enden der Führungsrohre (4) vornimmt und daß man die feste, endgültige Befestigung der Abstandsgitter (5) durchführt, während die Führungsrohre (4) gestreckt und ohne irgendeine hervorgerufene Torsion angeordnet sind.

2. Werkzeug zur Durchführung eines Verfahrens zur Herstellung eines Brennelementbündels für einen Leichtwasserkernreaktor, dadurch gekennzeichnet, daß es für jedes Ende eines solchen Bündels umfaßt:
- eine innere Metallplatte (11a, 11b), die an dem Boden des Endstücks (2, 3) anwendbar ist,
- eine äußere Metallplatte (10a, 10b), die durch die Wirkung eines Linearantriebs (18a, 18b) entlang von Gleitsäulen (12a, 12b), die an der inneren Platte (11a, 11b) befestigt sind, in Längsverschieberichtung in bezug auf jene verschiebbar ist,
- mit Gewinde versehene Zugstücke (9a, 9b), die durch korrespondierende Öffnungen (14a, 14b, 15a, 15b) in dem Endstück und der inneren und der äußeren Platte hindurchgehen, wobei jedes der Zugstücke mit einem Innengewinde in einem Ende eines Führungsrohres (4) des Bündels in Eingriff bringbar ist, und mit einem Kopf (27a, 27b) versehen ist, an dem sich eine Ausgleichsfeder (17a, 17b) für die Wirkung des Linearantriebs abstützt.

3. Werkzeug zur Durchführung eines Verfahrens zur Herstellung eines Brennelementbündels für einen Leichtwasserkernreaktor, dadurch gekennzeichnet, daß es für jedes Ende eines solchen Bündels umfaßt:

- eine innere Metallplatte (11a, 11b), die auf den Boden des Endteils (2, 3) des Bündels anwendbar ist,

- eine äußere Metallplatte (10a, 10b), die unter der Wirkung eines Linearantriebs (18a, 18b) an Gleitsäulen (12a, 12b) entlang, die an der inneren Platte (11a, 11b) befestigt sind, in bezug auf diese in Längsverschieberichtung verschiebbar ist,

- Zugstücke (9a, 9b), die durch korrespondierende Öffnungen in der Endplatte und in der inneren und der äußeren Platte hindurchgehen und an ihrem Ende mit einer Scherenspreize (26) versehen sind, mit der das hohle Innere des entsprechenden Führungsrohres (4) erfaßbar ist, und jeweils mit einem Kopf ausgerüstet sind, an dem sich eine Ausgleichsfeder für die Wirkung des Linearantriebs abstützt.

## Claims

1. Process for the construction of a fuel assembly for a nuclear reactor of the light water type, comprising, in known manner, two end members (2, 3) bridged by hollow guide tubes (4) and to which are fixed spacer grids (5) in which fissile fuel rods (6) are fixed, of the type in which the end members (2, 3) are preliminarily fixed to the guide tubes (4) which have previously been slid with light friction on the spacer grids (5), final rigid fixing is provided between the spacer grids (5) and the guide tubes (4), at least one of the end members is loosened to slide fuel rods (6) into the remaining empty positions on the spacer grid (5) and the final locking is provided on the end member or members, characterised in that the preliminary fixing of the end members (2, 3) is achieved without inducing any torsion on the guide tubes (4) located between the two end members (2, 3), and in that longitudinal traction is applied to at least one of the two ends of the guide tubes (4), and in that the final rigid fixing of the spacer grid (5) is provided while the guide tubes (4) are placed under tension and with no induced torsion.

2. Apparatus for carrying out a process for the construction of a fuel assembly for a nuclear reactor of the light water type, characterised in that it comprises, for each end of such an assembly:

- an internal metal plate (11a, 11b) adapted for application to the end of an end member (2, 3) of the assembly;

- an external metal plate (10a, 10b) adapted for longitudinal translational displacement with respect to the internal plate (11a, 11b) under the effect of a jack (18a, 18b), lengthwise of slide columns (12a, 12b) fixed on said internal plate;

- threaded draw rods (9a, 9b) passing through corresponding orifices (14a, 14b, 15a, 15b) in the end member and in the internal and external plates, each of the draw rods being adapted to come into engagement with an internal thread on one end of a guide tube (4), of the assembly, and having a head (27a, 27b) for engagement of a compensation spring (17a, 17b) for the action of the jack.

3. Apparatus for carrying out a process for the construction of a fuel assembly for a nuclear reactor of the light water type, characterised in that it comprises, for each end of such an assembly:

- an internal metal plate (11a, 11b) adapted for application to the end of an end member (2, 3) of the assembly;

- an external metal plate (10a, 10b) adapted for longitudinal translational displacement with respect to the internal plate (11a, 11b) under the effect of a jack (18a, 18b), lengthwise of slide columns (12a, 12b) fixed on said internal plate;

- draw rods (9a, 9b) passing through corresponding orifices in the end member and in the internal and external plates, provided at their ends with an expandable clamp (26) adapted to engage the hollow interior of the corresponding guide tube (4) and each having a head for engagement of a compensation spring for the action of the jack.

0 082 075

FIG.1

FIG.2

FIG.4

# FIG.3a

# FIG. 3b

FIG.5